# EUROPEAN PATENT SPECIFICATION

(11) **EP 2 877 305 B1**
(45) Date of publication and mention of the grant of the patent: **23.12.2020**
(21) Application number: 13765411.7
(22) Date of filing: 24.07.2013
(51) Int. Cl.: B22D 19/02, B22D 19/14, B22D 27/18

(54) **METHOD FOR MANUFACTURING STEEL CASTS AND STEEL CASTS THUS MANUFACTURED**
VERFAHREN ZUR HERSTELLUNG VON STAHLGÜSSEN UND SO HERGESTELLTER STAHLGUSS
PROCÉDÉ DE FABRICATION DE PIÈCES COULÉES EN ACIER ET PIÈCES COULÉES EN ACIER AINSI FABRIQUÉES

(30) Priority: 25.07.2012 IT UD20120134
(43) Date of publication of application: 03.06.2015
(73) Proprietor: F.A.R. - Fonderie Acciaierie Roiale - SPA, 33010 Reana del Rojale (IT)
(72) Inventor: ANDREUSSI, Alberto, I-33019 Tricesimo (IT); ANDREUSSI, Primo, I-33010 Reana del Rojale (IT); PONTELLI, Eddy, I-33019 Tricesimo (IT); VENEROSO, Enrico, I-33100 Udine (IT)
(74) Representative: Petraz, Gilberto Luigi
(86) International application number: PCT/IB2013/001611
(87) International publication number: WO 2014/016665

(56) References cited:
- CN-A- 101 412 104
- US-A1- 2011 225 856

## Description

### FIELD OF THE INVENTION

The present invention concerns a method for manufacturing steel casts, advantageously but not exclusively of manganese steel, used to obtain wear elements, and casts thus manufactured.

The wear elements are usable in all the applications where a high resistance to wear is required, even under impulsive loads, such as crushers, mills, grinding members, turbo-machine components or earth moving machines.

### BACKGROUND OF THE INVENTION

It is known to manufacture, by casting, steel casts to obtain wear elements, used in a plurality of applications which require great resistance both to abrasion and to knocks. For example, such steels are used to make components for mills, crushers or safes, components for excavators or tracked means or turbo-machines etc..

In a preferential formulation the steels in question contain up to 1.5% carbon and up to 20% manganese, and have an austenitic structure that allows to combine great hardness with considerable toughness. These steels also have a good tendency for work-hardening and great ductility.

It is known to add elements that form complex carbides to these steels, in order to form manganese steel alloys that are more resistant to wear. Among these components the most commonly used is chromium which, as well as raising the yield point, induces the formation of chromium carbide in the austenitic matrix.

However, chromium carbides have the tendency to precipitate to the grain edge, making the structure fragile and reducing the toughness of the steel. A heat treatment is therefore necessary, typically a solubilization annealing followed by water quenching, which is carried out after the cooling of the steel has been completed. The annealing and subsequent rapid cooling allow to make the carbides migrate from the grain edge to the austenitic matrix.

For high chromium contents, annealing does not allow to obtain a complete solubilization of the carbides, and therefore it is intended to modify the form of the latter, so as to make them globular and therefore less inclined to form cracks. Furthermore, another function of annealing and quenching is to distribute the carbides present at the grain edge uniformly around the austenitic grain.

Although these known steels are the best for resistance to wear with regard to materials to be ground having considerable toughness and abrasiveness, they also have the disadvantage that they have low heat-conductivity. Indeed, this has limited their use to thicknesses of not more than about 100 mm, in that the water quenching process entails, in products of greater thicknesses, the creation of internal tensions such as to cause cracks. In this way, if such thicknesses are obtained with steels containing manganese comprised between 12% and 20%, the properties of toughness that are typical of such steels are compromised.

It is also known that this limitation in the thicknesses can be overcome by introducing elements, such as for example titanium, able to give origin to hard compounds already in the liquid phase of the alloy. The hard compounds are rarely located at the grain edge, but remain uniformly distributed in the austenitic matrix, even after the solubilization treatment. The steel alloys that are obtained are therefore more resistant to abrasion and wear compared with steels containing chromium and without titanium, especially in the case of considerable thicknesses and particularly onerous conditions of use.

One disadvantage of steels containing titanium is due to the fact that they confer greater resistance to wear on the whole section of an article, even though it is necessary to have a particular resistance only in those parts that are most stressed. This makes the article less workable and causes a considerable increase in the costs of working, due to the removal of chip.

Another disadvantage connected to the use of titanium and the manufacture of an article having uniformly optimum characteristics lies in the cost of said article, which is very high.

To reduce costs, US 2011/225856 A proposes an exothermic method to form titanium carbides using a mixture of powders of titanium and carbon. The powders, having a precise particle size, are confined in a container that is heated by the molten metal until a chemical reaction is triggered in them, which raises the temperature and generates titanium carbides. CN101412104A discloses a method for preparing a composite wear-resistant abrasive disc with a hard phase.

The purpose of the present invention is therefore to perfect an endothermic method that allows to obtain, by casting, casts of steel alloys, advantageously but not exclusively manganese steel, having heterogeneous characteristics. In particular, it is intended to make steel casts to obtain wear elements having throughout the toughness of manganese steel and, in localized zones, the hardness needed to resist stresses of wear and abrasion.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, an endothermic method according to the present invention is usable to manufacture steel casts, advantageously but not exclusively manganese steel, from which to make wear elements. The method comprises at least a step of preparing at least one reinforcement insert comprising a substantially filiform tubular container, and a step of preparing a mold made, for example, with olivine sand and binder additives. The step of preparing the mold provides a sub-step of positioning the reinforcement insert inside the mold in the zones corresponding to the cast zones coinciding with those which, during use, will be the zones of the wear element most subjected to wear. After the step of preparing the mold, the method in question comprises a casting step, during which steel is cast inside the mold.

According to one feature of the present invention, the step of preparing at least one reinforcement insert provides operations to fill said substantially filiform tubular container, according to the length in steel, with a mixture of materials which, because of the effect of the heat brought by the material cast, melts and generates the desired hard alloy; said material is initially advantageously in powder form and/or in small pieces so that the heat of the molten metal is sufficient to trigger the reaction.

According to the invention, the section of the tubular container is advantageously filiform and can be round, square, rectangular, polygonal or other which is more suitable to the purpose on each occasion.

According to a variant the mixture is compacted inside the filiform tubular container.

According to the invention the substantially filiform tubular container is subjected to a shaping operation in order to obtain a spatial shape which leads to the desired structure of the reinforcement insert.

According to a variant the tubular steel container has a continuous wall or, at the end of working, it results as having a continuous wall.

According to a variant, the compacting of the mixture of powders occurs by means of perimeter restriction of the tubular container.

The heat of the liquid metal cast in the mold during the casting step determines, by endothermic action, at least a partial melting of the tubular container constituting the reinforcement insert and as a consequence an intimate welding between the reinforcement insert and the material cast.

At the same time, the heat of the molten metal causes the melting of the mixture present inside the advantageous filiform tubular container, and said melting determines a hard body depending on requirements.

Consequently, a structural continuity is obtained which guarantees optimum adherence and stability between the reinforcement insert and the base material of the wear body.

Moreover, the hardened mixture, in relation to the composition of the mixture itself contained in the tubular container, gives origin to mixed and complex carbides which confer the desired hardness and resistance to wear to the zone of the cast where the inserts are disposed.

Moreover, special hard alloys are formed inside the mass of molten metal.

According to the present invention the reinforcement insert comprises anchoring means able to anchor the reinforcement insert to at least a perimeter wall of the mold.

According to the invention, during the positioning sub-step an anchoring operation is provided, during which the reinforcement insert is anchored to at least a perimeter wall of the mold.

According to a variant, the anchoring element is structurally part of the reinforcement insert.

In this way, even during the casting step, the reinforcement insert remains in its own position, guaranteeing its targeted position in the cast.

It is within the spirit of the invention to provide that, after a stand-by step, during which the complete solidification of the cast occurs, a heat treatment step is possibly carried out, during which the cast is heated and then cooled in water in order to further increase the hardness of the zone where there is the reinforcement insert.

The cast is also part of the present invention, intended for the production of a wear element, deriving from the solidification of a manganese steel cast, or a comparable material, inside a mold and which is obtained using the method described above.

The cast has zones with a heterogeneous microstructure and hardness, defined at least around a reinforcement insert, positioned in the mold in the zones coinciding with those which, during use, will be the zones of the wear element most subject to wear. The resulting wear element is also part of the invention.

According to the present invention, the reinforcement insert comprises at least an advantageously filiform tubular container, depending on its length, filled with powder or materials in small pieces which, with the heat of melting and by an endothermic effect, are transformed, creating mixed and complex carbides. The powder is a powder with a base of iron mixed or combined with compounds containing at least one of either carbon, or chromium, to which one or more of molybdenum, tungsten, vanadium and boron have been added.

According to another feature of the present invention, in the case of a toric section the tubular container has an equivalent external diameter comprised between 1 mm and 9 mm, and a thickness of the tube comprised between 0.1 mm and 1.5 mm. In the case of other sections, they will have on each occasion an internal volume coherent with that indicated in the case of the toric section.

According to the invention, the tubular container is worked so as to define the desired shape which the structure of the reinforcement insert must have.

In another variant, the reinforcement insert has a structure defined by a plurality of shaped bodies associated with each other to define a meshed network, or a tubular geometric shape, spiral or coil-shaped, or other shapes that are suitable on each occasion.

The types of reinforcement insert described above have the advantage of being extremely versatile, in that they can be made in various shapes and various degrees of compactness, depending on the degree of reinforcement that is to be conferred on the zones of the cast.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic representation of one form of embodiment of a method according to the present invention;
- fig. 2 is an enlarged detail of fig. 1;
- fig. 3 is a section from III to III of fig. 2;
- fig. 4 schematically shows a cast according to the present invention;
- fig. 5 is a variant of a detail in fig. 2;
- fig. 6 is a variant of fig. 5, with a flat spiral.

### DETAILED DESCRIPTION OF SOME FORMS OF EMBODIMENT

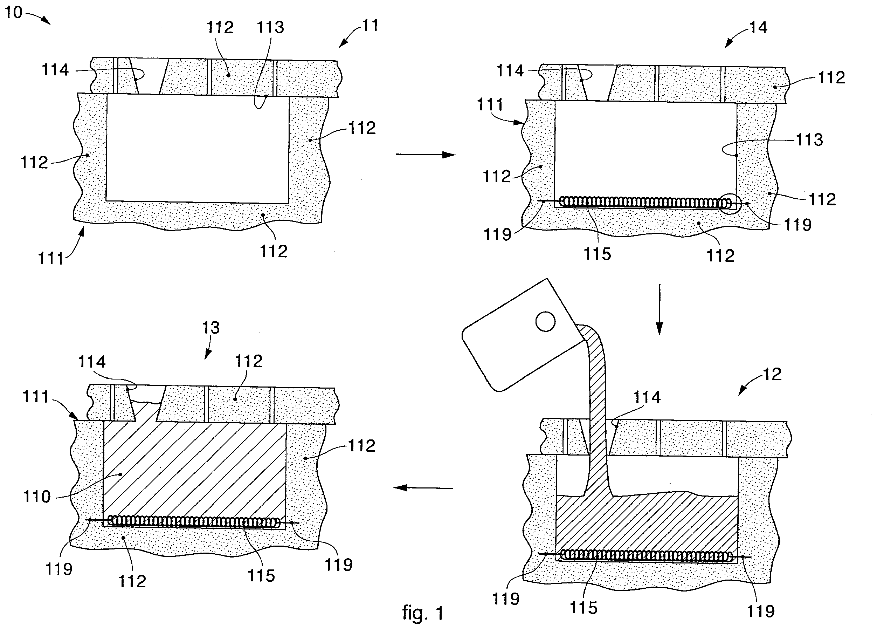

With reference to fig. 1, a method 10 for manufacturing steel casts 110 advantageously but not exclusively manganese steel according to the present invention allows to obtain casts 110 having a heterogeneous micro-structure.

The method 10 provides that in a preparation step 11 a mold 111 is obtained for each cast 110, that in a subsequent casting step 12 melted manganese steel is cast inside the mold 111, and that in a stand-by step 13 the cast 110 solidifies.

During the preparation step 11, a plurality of perimeter walls 112 are made, in this case for example with olivine sand and binder additives, which delimit an internal cavity 113. An upper opening 114 puts the internal cavity 113 in communication with the outside of the mold 111 and allows the molten steel to enter into the internal cavity 113 during the casting step 12.

The preparation step 11 comprises a sub-step 14 of positioning at least one reinforcement insert 115 inside the internal cavity 113 of the mold 111.

The reinforcement insert 115 is prepared in a preparation step prior to the preparation step 11 of the mold 111.

The reinforcement insert 115 shown in figs. 1, 2 and 3 in this case is defined by a filiform tubular container 116 with a substantially circular section, wound and bent back upon itself so as to define a plurality of spirals 117. The density of the spirals 117 depends on the requirements of the finished product.

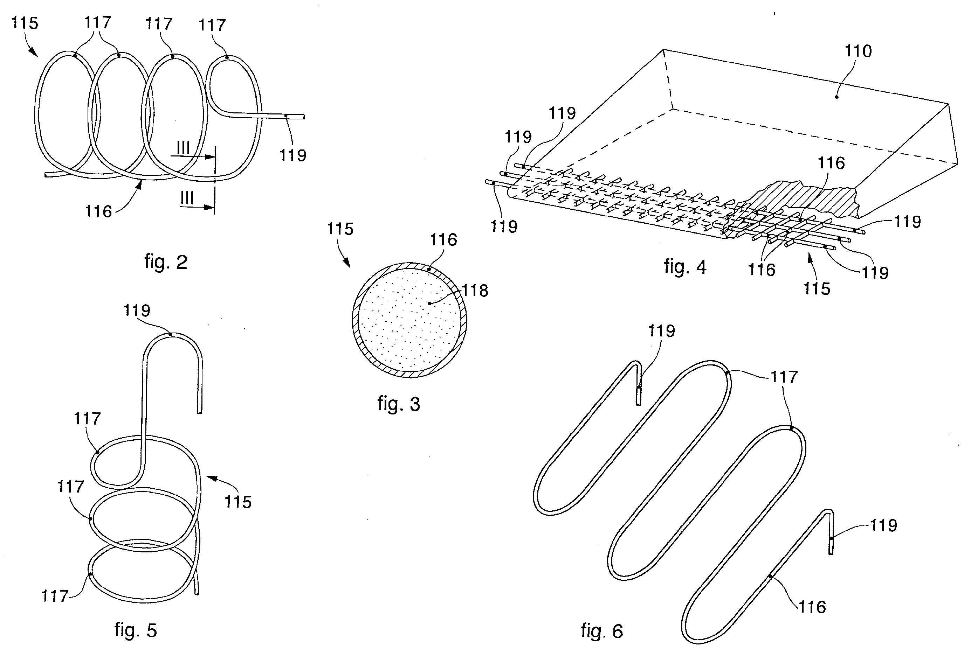

The tubular container 116 is filled with a mixture of powders and/or small pieces 118 (fig. 3), for example with a base of iron, and also containing compounds containing carbon or chromium which, as they melt, achieve alloys with mixed and complex carbides.

A first formulation of the present invention provides that, as well as the iron base, the powder and/or small pieces 118 comprise the following components:
- carbon in a percentage comprised between 2.5% and 3.5%;
- chromium in a percentage comprised between 20% and 30%;
to which can be added, depending on the other characteristics to be obtained, the following optional components:
- molybdenum in a percentage comprised between 0.1% and 1%;
- tungsten in a percentage comprised between 0.1% and 0.5%.

A second formulation of the present invention provides that, as well as the iron base, the hardening powder 118 comprises the following components:
- carbon in a percentage comprised between 0.5% and 1.0%;
- chromium in a percentage comprised between 10% and 15%;
to which can be added the following optional components:
- molybdenum in a percentage comprised between 0.1% and 1%;
- vanadium in a percentage comprised between 0.2% and 1.5%;
- boron in a percentage comprised between 0.001% and 0.015%.

According to a third formulation of the present invention, as well as the iron base, the hardening powder 118 comprises the following components:
- carbon in a percentage comprised between 0.3% and 0.5%;
- chromium in a percentage comprised between 4% and 5%;
- molybdenum in a percentage comprised between 0.5% and 1.5%.

Other formulations of the mixtures can be obtained as simple applications of the base lines indicated above.

Although in the figures cited the reinforcement insert 115 is formed by a single tubular container 116, it can also be formed by a plurality of analogous tubular containers 116, or with different shapes, joined together or adjacent, to define a modular structure.

In a variant, shown in fig. 4, the reinforcement insert 115 is formed by a plurality of tubular containers 116 joined together to form a meshed network. The meshed network can define both a reinforcement plane and, if wound or bent, a three-dimensional reinforcement shape.

During the positioning sub-step 14 of the reinforcement insert 115, an anchoring operation is also performed, during which it is anchored at least to one of the perimeter walls 112 of the mold 111. To this purpose, the reinforcement insert 115 comprises at its ends two appendixes 119, which function as anchoring means and which are inserted inside the corresponding perimeter walls 112.

This stratagem allows the reinforcement insert 115 to remain in its correct position also during the subsequent casting step 12, during which it is completely incorporated in the matrix of manganese steel that is cast.

Fig. 5 shows a variant appendix 119, the hooked shape of which differs from the rectilinear shape of the appendixes 119 shown in figs. 1, 2 and 4. This gives greater stability to the reinforcement insert 115, preventing it from rotating around the axis of the spirals 117.

According to a variant embodiment of the reinforcement insert 115 (fig. 6), it is made so as to define a plurality of spirals 117 lying on a single common lying plane. In this case too, the reinforcement insert 115 is provided with two appendixes 119 that are anchored in the perimeter walls 112 during the positioning sub-step 14.

Once the cast 110 is completely solidified, subsequent heat treatments, for example inducing martensitic transformations inside the cast 110, allow to give further hardness to the zones that have the reinforcement inserts 115.

It is clear that modifications and/or additions of parts may be made to the method for manufacturing steel casts and to the steel casts as described heretofore, without departing from the field and scope of the present invention.

## Claims

1. Method for manufacturing steel casts (110), in particular but not exclusively manganese steel, intended to obtain a wear element, comprising at least a step of preparing at least one reinforcement insert (115), said method comprises:
- a step (11) of preparing a mold (111) for the cast (110) to be manufactured,
- a subsequent step (12) of casting steel inside said mold (111),
**characterized in that** said step (11) of preparing said mold (111) provides a sub-step (14) of positioning said at least one reinforcement insert (115) inside said mold (111) in the zones corresponding to the zones of said cast (110) coinciding with those which, in use, will be the zones of said wear element most subjected to wear, said at least one reinforcement insert (115) comprising a substantially filiform tubular container (116) and anchoring means in the form of appendixes (119) provided at each end of said substantially filiform tubular container (116), said sub-step (14) of positioning said at least one reinforcement insert (115) comprising an anchoring operation in which the anchoring means in the form of appendixes (119) of said at least one reinforcement insert (115) is anchored to at least a perimeter wall (112) of said mold (111),
wherein preparing said at least one reinforcement insert (115) provides the operations of filling said substantially filiform tubular container (116) with a mixture of powder and/or small pieces (118) having a base of iron and comprising at least carbon and chromium and one or more additional components selected between tungsten, molybdenum, vanadium and boron so as to form a filled substantially filiform container (116), and of shaping, also spatially, said filled substantially filiform tubular container (116) to obtain the physical structure of said at least one reinforcement insert (115),
wherein at least part of the filled substantially filiform container (116) and said mixture of powder and/or small pieces (118) is brought to melting conditions and melted by endothermic action of the steel cast in the subsequent step (12) so as to weld said at least one reinforcement insert (115) and the steel cast.

2. Method as in claim 1, **characterized in that** during said preparation step said mixture of powders or small pieces (118) is compacted inside said substantially filiform tubular container (116), the equivalent diameter of said substantially filiform tubular container (116) being comprised between 1 and 9 mm.

3. Method as in claim 1 or 2, **characterized in that** during the shaping of said filled substantially filiform tubular container (116) the anchoring means in the form of appendixes (119) is obtained of said at least one reinforcement insert (115) in said mold (111).

4. Steel cast, to obtain a wear element, made with a method according to any claim hereinbefore, having a heterogeneous microstructure and hardness positioned point-by-point, said microstructure and said hardness being defined by at least one reinforcement insert (115) integrated by endothermic action into said steel cast during the casting of the steel into a mold (111), **characterized in that** said at least one reinforcement insert (115) is obtained from a substantially filiform tubular container (116) filled with a mixture of powder and/or small pieces (118) having a base of iron and comprising at least carbon and chromium and one or more additional components selected between tungsten, molybdenum, vanadium and boron so as to form a filled substantially filiform container (116), which, during the subsequent casting of the cast steel, melts by endothermic action of the steel cast so as to weld said at least one reinforcement insert (115) and the steel cast and generates mixed and complex carbides, wherein said at least one reinforcement insert (115) comprises anchoring means in the form of appendixes (119) provided at each end of said substantially filiform tubular container (116) and anchoring said at least one reinforcement insert (115) to at least a perimeter wall (112) of said mold (111).

5. Steel cast as in claim 4, **characterized in that** said filiform tubular container (116) has in section an area generated by an equivalent external diameter comprised between 1 mm and 9 mm, the thickness being comprised between 0.1 mm and 1.5 mm.

6. Steel cast as in claim 4 or 5, **characterized in that** said filiform tubular container (116) is shaped, also spatially, to define the structure of said at least one reinforcement insert (115) of the desired shape and compactness.

7. Wear element comprising a steel cast (110) according to one or another of the previous claims 4 to 6.

## Patentansprüche

1. Verfahren zur Herstellung von Gussstahl (110), insbesondere, aber nicht ausschließlich Manganstahl, um ein Verschleißelement zu erhalten, das mindestens einen Schritt des Vorbereitens mindestens eines Verstärkungseinsatzes (115) aufweist, wobei das Verfahren Folgendes umfasst:
- einen Schritt (11) des Vorbereitens einer Form (111) für den herzustellenden Guss (110),
- ein nachfolgender Schritt (12) des Gießens von Stahl in die Form (111),
**dadurch gekennzeichnet, dass** der Schritt (11) des Vorbereitens der Form (111) einen Unterschritt (14) des Positionierens des mindestens einen Verstärkungseinsatzes (115) im Inneren der Form (111) in jenen Zonen vorsieht, die den Zonen des Gusses (110) entsprechen, die mit denjenigen übereinstimmen, die im Gebrauch die Zonen des Verschleißelements sein werden, die einem Verschleiß am meisten ausgesetzt sind, wobei der mindestens eine Verstärkungseinsatz (115) einen im Wesentlichen fadenförmigen rohrförmigen Behälter (116) und Verankerungsmittel in Form von Fortsätzen (119) umfasst, die an jedem Ende des im Wesentlichen fadenförmigen rohrförmigen Behälters (116) angeordnet sind, wobei der Unterschritt (14) des Positionierens des mindestens einen Verstärkungseinsatzes (115) einen Verankerungsvorgang umfasst, bei dem das Verankerungsmittel in Form von Fortsätzen (119) des mindestens einen Verstärkungseinsatzes (115) an mindestens einer Umfangswand (112) der Form (111) verankert wird,
wobei das Vorbereiten des mindestens einen Verstärkungseinsatzes (115) die Vorgänge des Füllens des im Wesentlichen fadenförmigen röhrenförmigen Behälters (116) mit einem Gemisch aus Pulver und/oder kleinen Stücken (118) vorsieht, das eine Basis aus Eisen aufweist und mindestens Kohlenstoff und Chrom und eine oder mehrere zusätzliche Komponenten umfasst, die zwischen Wolfram, Molybdän, Vanadium und Bor gewählt werden, um so einen gefüllten im Wesentlichen fadenförmigen Behälter (116) zu bilden, und den gefüllten im Wesentlichen fadenförmigen röhrenförmigen Behälter (116) räumlich zu formen, um die physikalische Struktur des mindestens einen Verstärkungseinsatzes (115) zu erhalten,
wobei mindestens ein Teil des gefüllten im Wesentlichen fadenförmigen Behälters (116) und das Gemisch aus Pulver und/oder kleinen Stücken (118) auf Schmelzbedingungen gebracht und durch endotherme Wirkung des Stahlgusses in dem nachfolgenden Schritt (12) geschmolzen wird, um so den mindestens einen Verstärkungseinsatz (115) und den Stahlguss zu verschweißen.

2. Verfahren nach Anspruch 1, **dadurch gekennzeichnet, dass** während des Vorbereitungsschritts das Gemisch aus Pulvern oder kleinen Stücken (118) in dem im Wesentlichen fadenförmigen röhrenförmigen Behälter (116) verdichtet wird, wobei der äquivalente Durchmesser des im Wesentlichen fadenförmiger röhrenförmiger Behälter (116) zwischen 1 und 9 mm liegt.

3. Verfahren nach Anspruch 1 oder 2, **dadurch gekennzeichnet, dass** während des Formens des gefüllten im Wesentlichen fadenförmigen rohrförmigen Behälters (116) die Verankerungsmittel in Form von Fortsätzen (119) des mindestens einen Verstärkungseinsatzes (115) in der Form (111) erhalten werden.

4. Gussstahl zum Erhalt eines Verschleißelements, der durch ein Verfahren nach einem der vorstehenden Ansprüche hergestellt ist und eine Punkt für Punkt angeordnete heterogene Mikrostruktur und Härte aufweist, wobei die Mikrostruktur und die Härte durch mindestens einen Verstärkungseinsatz (115) definiert sind, der durch endotherme Wirkung in den Gussstahl während des Gießens des Stahls in eine Form (111) integriert ist, **dadurch gekennzeichnet, dass** der mindestens eine Verstärkungseinsatz (115) aus einem im Wesentlichen fadenförmigen röhrenförmigen Behälter (116) gebildet ist, der mit einem Gemisch aus Pulver und/oder kleinen Stücken (118) gefüllt ist, die eine Basis aus Eisen aufweist und mindestens Kohlenstoff und Chrom und eine oder mehrere zusätzliche Komponenten umfasst, die zwischen Wolfram, Molybdän, Vanadium und Bor ausgewählt sind, um so einen gefüllten im Wesentlichen fadenförmigen Behälter (116) zu bilden, der während des anschließenden Gießens des Stahlgusses durch endotherme Wirkung des Stahlgusses schmilzt, um so den mindestens einen Verstärkungseinsatz (115) und den Stahlguss zu verschweißen, und gemischte und komplexe Karbide zu erzeugen, wobei der mindestens eine Verstärkungseinsatz (115) Verankerungsmittel in Form von Fortsätzen (119) umfasst, die an jedem Ende des im Wesentlichen fadenförmigen rohrförmigen Behälters (116) angeordnet sind und den mindestens einen Verstärkungseinsatz (115) an mindestens einer Umfangswand (112) der Form (111) verankern.

5. Gussstahl nach Anspruch 4, **dadurch gekennzeichnet, dass** der fadenförmige röhrenförmige Behälter (116) im Querschnitt einen Bereich aufweist, der durch einen äquivalenten Außendurchmesser gebildet ist, der zwischen 1 mm und 9 mm liegt, wobei die Dicke zwischen 0,1 mm und 1,5 mm liegt.

6. Gussstahl nach Anspruch 4 oder 5, **dadurch gekennzeichnet, dass** der fadenförmige rohrförmige Behälter (116) derart räumlich geformt ist, dass er die Struktur des mindestens einen Verstärkungseinsatzes (115) in der gewünschten Form und Kompaktheit definiert.

7. Verschleißelement, das einen Gussstahl (110) nach einem der vorstehenden Ansprüche 4 bis 6 umfasst.

## Revendications

1. Procédé de fabrication de pièces coulées en acier (110), en particulier mais non exclusivement en acier au manganèse, destiné à obtenir un élément d'usure, comprenant au moins une étape de préparation d'au moins un insert de renforcement (115), ledit procédé comprend :
- une étape (11) de préparation d'un moule (111) pour la pièce coulée (110) à fabriquer,
- une étape ultérieure (12) de coulée d'acier à l'intérieur dudit moule (111), **caractérisé en ce que** ladite étape (11) de préparation dudit moule (111) prévoit une sous-étape (14) de positionnement dudit au moins un insert de renforcement (115) à l'intérieur dudit moule (111) dans les zones correspondant aux zones de ladite pièce coulée (110) coïncidant avec celles qui, lors de l'utilisation, seront les zones dudit élément d'usure les plus soumises à l'usure, ledit au moins un insert de renforcement (115) comprenant un récipient tubulaire (116) sensiblement filiforme et un moyen d'ancrage en forme d'appendice (119) prévu à chaque extrémité dudit récipient tubulaire (116) sensiblement filiforme, ladite sous-étape (14) de positionnement dudit au moins un insert de renforcement (115) comprenant une opération d'ancrage dans laquelle les moyens d'ancrage sous forme d'appendices (119) dudit au moins un insert de renforcement (115) sont ancrés à au moins une paroi périphérique (112) dudit moule (111),
le fait de préparer ledit au moins un insert de renforcement (115) incluant les opérations consistant à remplir ledit récipient tubulaire (116) sensiblement filiforme avec un mélange de poudre et / ou de petits morceaux (118) à base de fer et comprenant au moins du carbone et du chrome et un ou plusieurs composants additionnels choisis parmi le tungstène, le molybdène, le vanadium et le bore de manière à former un récipient (116) sensiblement filiforme rempli, et consistant à mettre en forme, également spatialement, ledit récipient tubulaire (116) sensiblement filiforme rempli pour obtenir la structure physique dudit au moins un insert de renforcement (115),
au moins une partie du récipient (116) sensiblement filiforme rempli et ledit mélange de poudre et / ou de petits morceaux (118) étant amenés à des conditions de fusion et étant fondus par une action endothermique de la pièce en acier coulée lors de l'étape subséquente (12) de manière à souder ledit au moins un insert de renforcement (115) et la pièce en acier coulé.

2. Procédé selon la revendication 1, **caractérisé en ce que**, lors de ladite étape de préparation, ledit mélange de poudres ou de petits morceaux (118) est compacté à l'intérieur dudit récipient tubulaire (116) sensiblement filiforme, le diamètre équivalent dudit récipient tubulaire (116) sensiblement filiforme étant compris entre 1 et 9 mm.

3. Procédé selon la revendication 1 ou la revendication 2, **caractérisé en ce que**, lors de la mise en forme dudit récipient tubulaire (116) sensiblement filiforme rempli, les moyens d'ancrage sous la forme d'appendices (119) sont obtenus dudit au moins un insert de renforcement (115) dans ledit moule (111).

4. Pièce en acier coulé, pour obtenir un élément d'usure, faite selon un procédé selon l'une quelconque des revendications précédentes, présentant une microstructure et une dureté hétérogènes positionnées point par point, ladite microstructure et ladite dureté étant définies par au moins un insert de renforcement (115) intégré par action endothermique dans ladite pièce en acier coulé lors de la coulée de l'acier dans un moule (111), **caractérisée en ce que** ledit au moins un insert de renforcement (115) est obtenu à partir d'un récipient tubulaire (116) sensiblement filiforme rempli d'un mélange de poudre et / ou de petits morceaux (118) à base de fer et comprenant au moins du carbone et du chrome et un ou plusieurs composants additionnels choisis parmi le tungstène, le molybdène, le vanadium et le bore de manière à former un récipient (116) sensiblement filiforme rempli, qui, lors de la coulée ultérieure de la pièce en acier coulé, fond par action endothermique de la pièce en acier coulé de manière à souder ledit au moins un insert de renforcement (115) et la pièce en acier coulé, et génère des carbures mélangés et complexes, ledit au moins un insert de renforcement (115) comprenant des moyens d'ancrage sous la forme d'appendices (119) prévus à chaque extrémité dudit récipient tubulaire (116) sensiblement filiforme, réalisant l'ancrage dudit au moins un insert de renforcement (115) à au moins une paroi périphérique (112) dudit moule (111).

5. Pièce en acier moulé selon la revendication 4, **caractérisé en ce que** ledit récipient tubulaire filiforme (116) présente en section une surface générée par un diamètre extérieur équivalent compris entre 1 mm et 9 mm, l'épaisseur étant comprise entre 0,1 mm et 1,5 mm.

6. Pièce en acier moulé selon la revendication 4 ou la revendication 5, **caractérisé en ce que** ledit récipient tubulaire filiforme (116) est conformé, également spatialement, de façon à définir la structure dudit au moins un insert de renforcement (115) ayant la forme et la compacité souhaitées.

7. Élément d'usure comprenant une pièce moulée en acier (110) selon l'une ou l'autre des revendications 4 à 6 qui précèdent.
